# EUROPÄISCHE PATENTSCHRIFT

(11) **EP 1 330 137 B1**
(45) Veröffentlichungstag und Bekanntmachung des Hinweises auf die Patenterteilung: **20.10.2004**
(21) Anmeldenummer: 02001269.6
(22) Anmeldetag: 17.01.2002
(51) Int. Cl.: H04Q 7/36, H04Q 7/38

(54) **Verfahren zur Verwaltung von Funkressourcen durch Überwachung der Interferenzsituation**
Process for managing radio ressouces by monitoring the interference situation
Procédé de gestion de ressources radio par surveillance de la situation d'interférence

(43) Veröffentlichungstag der Anmeldung: 23.07.2003
(73) Patentinhaber: SIEMENS AKTIENGESELLSCHAFT, 80333 München (DE)
(72) Erfinder: Karger, Stephan, 46499 Hamminkeln (DE)

(56) Entgegenhaltungen:
- EP-A- 1 122 965
- WO-A-00/57658
- WO-A-98/45967
- US-A- 6 023 463

## Beschreibung

Die Erfindung bezieht sich auf ein Verfahren zur Verwaltung von Funkressourcen in einer Mobilfunkzelle, die eine Mehrzahl mobiler Endgeräte, die durch ihre Funksignale unterscheidbar sind, und eine Basisstation umfasst.

Solche mobile Endgeräte sind beispielsweise dadurch unterscheidbar, dass sie auf verschiedenen Zeitschlitzen bei einem TDMA-System oder auf verschiedenen Frequenzen bei einem FDMA-System senden oder durch verschiedene Codes bei einem CDMA-System identifiziert werden können. Auch Kombinationen der soeben aufgezählten Unterscheidungs-Systeme sind möglich. Bei diesen sämtlichen Systemen ist es erforderlich, für jedes einzelne mobile Endgerät zu gewährleisten, dass es bei einem geeigneten Signal-zu-Interferenz-Verhältnis (SIR) arbeitet.

Ein Verfahren zur Verwaltung von Funkressourcen in einem Mobilfunknetz, bei dem ein mobiles Endgerät Interferenzmessergebnisse an eine Basisstation sendet, Interferenzquellen identifiziert werden, und die Ressourcen entsprechend der Ergebnisse und Identifizierung zugeteilt werden, wird z.B. in der WO 00/57685 beschrieben.

Die Gewährleistung des erforderlichen SIR-Verhältnisses erfolgt bisher durch Messung dieses Verhältnisses durch das mobile Endgerät mit Hilfe des ihm zugeordneten Signals, wonach im Bedarfsfall von der Basisstation eine höhere Signalleistung angefordert wird.

Ausgehend hiervon ist es eine Aufgabe der Erfindung, die Verwaltung von Funkressourcen einer Mobilfunkzelle so zu verbessern, dass die zur Verfügung stehenden Funkressourcen wirtschaftlicher genutzt werden.

Diese Aufgabe wird gelöst durch ein Verfahren zur Verwaltung von Funkressourcen in einer Mobilfunkzelle, die eine Mehrzahl mobiler Endgeräte, die durch ihre Funksignale unterscheidbar sind, und eine Basisstation umfasst, bei dem: ein mobiles Endgerät von der Basisstation aufgefordert wird, ein aktuell an einem Empfänger des mobilen Endgerätes anliegendes Signal, das für eine Interferenz-Situation am Ort des mobilen Endgerätes repräsentativ ist, zusammen mit Informationen zur Schätzung des Kanals zwischen dem mobilen Endgerät und der Basisstation auszusenden, so dass die Basisstation Rohdaten am Ort des mobilen Endgeräts erhält, das von dem mobilen Endgerät empfangene Signal und die Informationen zur Schätzung des Kanals zwischen dem mobilen Endgerät und der Basisstation zur Bestimmung der dem Signal zugrundeliegenden Funkquellen und der Intensitäten wenigstens eines Teils der Funkquellen auswertet und
die Basisstation in der Mobilfunkzelle die Verteilung der Funkressourcen zur Verbesserung der Interferenz-Situation am Ort des mobilen Endgerätes anpasst.

Auf diese Weise wird es ermöglicht, dass beispielsweise die Basisstation über die Interferenzsituation bei dem mobilen Endgerät durch Auswertung des Signals, das das mobile Endgerät empfangen und weitergesendet hat, sehr genau informiert ist. Die Auswertung der Interferenzsituation kann dazu führen, dass ein bestimmtes weiteres mobiles Endgerät als Hauptstörquelle für das mobile Endgerät identifiziert wird, und zwar beispielsweise anhand seines CDMA-Codes und seiner Intensität. Bei einem CDMA-System sind der Basisstation sämtliche in der Mobilfunkzelle verwendeten Codes und deren Zuordnung zu den mobilen Endgeräten in der Mobilfunkzelle bekannt, während dem mobilen Endgerät lediglich die eigenen und die allgemeinen Codes bekannt sind. Nach einer Identifizierung einer Hauptstörquelle kann die Funkressource, die von der Hauptstörquelle benutzt wird, so geändert werden, dass die Interferenzsituation am Ort des mobilen Endgerätes, das das Signal weitergesendet hat, verbessert wird.

Als mögliche Funkquellen, die störend wirken, kommen in erster Linie mobile Endgeräte aus derselben Mobilfunkzelle in Frage. Es ist jedoch auch möglich, dass Basisstationen aus benachbarten Mobilfunkzellen als Störquellen wirken. Beide Arten von Störquellen können auf Seiten der Basisstation, der das in Rede stehende mobile Endgerät zugeordnet ist, identifiziert werden, wobei auch die Intensität eines jeweiligen Störsignals gemessen wird. Bei dem wenigstens einen Teil der Funkquellen, für den Intensitäten gemessen werden, wird es sich häufig um denjenigen Teil handeln, bei dem die Intensitäten besonders hoch sind.

Die Anzahl auszuwertender Signalwerte richtet sich danach, welchen Anforderungen auf Seiten der Basisstation zu genügen ist, um eine zutreffende Identifizierung einzelner Störquellen zu ermöglichen. Mit welcher Wahrscheinlichkeit Störquellen identifiziert sein sollen, kann vorbestimmt sein und wird sich nach empirischen Ergebnissen für die Interferenzsituation in der Mobilfunkzelle richten.

Sobald die verwendete Ressource der Hauptstörquelle geeignet geändert ist, liegt eine verbesserte Interferenzsituation am Ort des mobilen Endgerätes vor. Auf diese Weise kann eine nach dem Stand der Technik erforderliche Erhöhung der Sendeleistung der Basisstation vermindert werden oder entfallen.

Die Informationen zur Schätzung des Kanals zwischen mobilen Endgerät der Basisstation können üblicher Weise verwendete Pilot-Bit- oder Mitamble-Bit Folgen sein, die die Basisstation auswerten kann, um die Eigenschaften des Kanals für die Rückübertragung von dem mobilen Endgerät zu der Basisstation zu ermitteln.

In dem Fall, wenn das mobile Endgerät mit einem zweiten mobilen Endgerät eine Signalisierungsverbindung aufnehmen will, kann die Basisstation bevorzugt eine Direktverbindung zwischen dem mobilen Endgerät und dem zweiten mobilen Endgerät initialisieren, wenn sich dadurch die Interferenz-Situation am Ort des mobilen Endgerätes verbessert. Nach dem Stand der Technik wird die Signalisierungsverbindung zwischen dem mobilen Endgerät und dem zweiten mobilen Endgerät über die Basisstation verwirklicht. Wenn sich jedoch das mobile Endgerät und das zweite mobile Endgerät beispielsweise in geringer Entfernung zueinander befinden, kann das zweite mobile Endgerät eine Hauptstörquelle für das mobile Endgerät sein, wenn die Signalisierungsverbindung über die Basisstation stattfindet, während eine Direktverbindung zur Einsparung von Ressourcen führen würde und auch ein geeignetes Signal-zu-Rauschen-Verhältnis erwarten ließe.

Eine Direktverbindung zwischen dem mobilen Endgerät und dem zweiten mobilen Endgerät kann insbesondere dann hergestellt werden, wenn die stärkste, in dem Empfangssignal des mobilen Endgerätes identifizierte Funkquelle das zweite mobile Endgerät ist, wobei die Interferenzsituation in der Funkzelle insgesamt berücksichtigt wird. In diesem Zusammenhang ist zu beachten, dass die Direktverbindung nicht zu zu starker Interferenz in weiteren mobilen Endgeräten führt, da in diesem Fall eines der mobilen Endgeräte innerhalb einer Downlink-Ressource senden muss und es zum sog. "near-far-Problem" kommen kann.

Da die mobilen Endgeräte in der Mobilfunkzelle nicht ortsfest sind, ist die Interferenzsituation in der Mobilfunkzelle eine Funktion der Zeit. Aus diesem Grund ändert sich auch die Interferenzsituation für jedes einzelne mobile Endgerät in der Mobilfunkzelle. Um zu vermeiden, dass das mobile Endgerät, welches bei einer Direktverbindung die Funktion der Basisstation übernimmt, für unzulässige Interferenz bei weiteren mobilen Endgeräten sorgt, können sämtliche mobilen Endgeräte in der Funkzelle wiederkehrend empfange Abtastwerte an die Basisstation aussenden und aufgrund dessen kann die Basisstation die Verteilung der Funkressourcen in der Mobilfunkzelle überprüfen.

Ein Ausführungsbeispiel des Verfahrens wird nachfolgend beschrieben: Ziel des Verfahrens ist es, die Interferenzsituation für ein bestimmtes mobiles Endgerät in einer Mobilfunkzelle zu überprüfen. Zunächst fordert eine Basisstation, in deren Mobilfunkzelle sich das mobile Endgerät befindet, das mobile Endgerät durch ein Signal auf, ein aktuell empfangenes Signal, das für eine Interferenz-Situation am Ort des mobilen Endgerätes repräsentativ ist, an die Basisstation zu senden. Dieses Signal kann unmittelbar hinter einem Analog/Digital-Wandler der Empfangsseite des mobilen Endgerätes abgegriffen werden, so dass der Basisstation Rohdaten für den Ort des mobilen Endgerätes übermittelt werden. Mit dem Empfangssignal wird auch eine Informations-Folge an die Basisstation von dem mobilen Endgerät aus übermittelt, die es der Basisstation gestattet, für die Übertragung von dem mobilen Endgerät zur Basisstation eine Kanalschätzung vorzunehmen. Zu diesem Zweck sind im Stand der Technik bereits sog. Pilot-Sequenzen oder Mitamble-Sequenzen bekannt.

Sämtliche mobilen Endgeräte in der Mobilfunkzelle arbeiten nach dem CDMA-Verfahren, so dass jedem mobilen Endgerät mindestens ein CDMA-Code zugeordnet ist. Diese sämtlichen CDMA-Codes sind der Basisstation bekannt und werden von dieser verwaltet.

Das von der Basisstation empfangene Signal wird von der Basisstation insofern weiter verarbeitet, dass sie anhand des Signals ermittelt, welche Störquellen in Form von beispielsweise weiteren mobilen Endgeräten in der Mobilfunkzelle sich in dem Signal niedergeschlagen haben. Dies wird anhand der bekannten CDMA-Codes vorgenommen.

Die Basisstation stellt fest, welche weiteren mobilen Endgeräte welchen Beitrag zur Interferenz am Ort des mobilen Endgerätes, dessen Interferenz-Situation festzustellen ist, beitragen. Ausgehend von diesem Ergebnis, weist die Basisstation bei Bedarf weiteren mobilen Endgeräten, die als besonders starke Störquellen für das mobile Endgerät eingeschätzt werden, andere physikalische Ressourcen zu, so dass sich die Interferenz-Situation am Ort des mobilen Endgerätes verbessert. Im Gegensatz zum Stand der Technik wird somit für die Kommunikationsverbindung zwischen dem mobilen Endgerät und der Basisstation nicht die Sendeleistung erhöht, sondern vielmehr die Verursacher von Störleistungen ermittelt, so dass beispielsweise durch Zuweisung eines anderen Trägers oder Zeitschlitzes für eine Störquelle die Störleistung für das mobile Endgerät vermindert wird.

Die Auswertung des Signals, das die Basisstation von dem mobilen Endgerät erhalten hat, kann auch dazu benutzt werden, ggf. eine Direktverbindung zwischen dem mobilen Endgerät und einem zweiten mobilen Endgerät, die in eine Kommunikationsverbindung treten wollen, herzustellen. Wenn beispielsweise das zweite mobile Endgerät als eine Hauptstörquelle in dem Signal identifiziert wird, das die Rohdaten am Ort des mobilen Endgerätes bildet und von dem mobilen Endgerät an die Basisstation zur Auswertung übermittelt wird, kann eine Direktverbindung durch die Basisstation zwischen dem mobilen Endgerät und dem zweiten mobilen Endgerät initialisiert werden. Als Randbedingung ist dabei zu beachten, dass die Interferenzsituation in der Mobilfunkzelle nicht unzulässig verschlechtert wird.

Zur Überwachung der Interferenz-Situation in der Mobilfunkzelle insgesamt können in regelmäßigen Abständen jeweils aktuell empfangene Signale von jedem einzelnem mobilen Endgerät an die Basisstation übermittelt werden, die sodann bei Bedarf Einfluss auf die Verteilung der in der Mobilfunkzelle verwendeten physikalischen Ressourcen nimmt. Auf diese Weise wird auch der Tatsache Rechnung getragen, dass die Interferenzsituation in einer Mobilfunkzelle zeitlicher Veränderung unterworfen ist.

## Patentansprüche

1. Verfahren zur Verwaltung von Funkressourcen in einer Mobilfunkzelle, die eine Mehrzahl mobiler Endgeräte, die durch ihre Funksignale unterscheidbar sind, und eine Basisstation umfasst, bei dem:
ein mobiles Endgerät von der Basisstation aufgefordert wird, ein aktuell an einem Empfänger des mobilen Endgerätes anliegendes Signal, das für eine Interferenz-Situation am Ort des mobilen Endgerätes repräsentativ ist, zusammen mit Informationen zur Schätzung des Kanals zwischen dem mobilen Endgerät und der Basisstation auszusenden, so dass die Basisstation Rohdaten am Ort des mobilen Endgeräts erhält, das von dem mobilen Endgerät empfangene Signal und die Informationen zur Schätzung des Kanals zwischen dem mobilen Endgerät und der Basisstation zur Bestimmung der dem Signal zugrundeliegenden Funkquellen und der Intensitäten wenigstens eines Teils oder Funkquellen auswertet und
die Basisstation in der Mobilfunkzelle die Verteilung der Funkressourcen zur Verbesserung der Interferenz-Situation am Ort des mobilen Endgerätes anpasst.

2. Verfahren nach Anspruch 1,
bei dem in dem Fall, wenn das mobile Endgerät mit einem zweiten mobilen Endgerät eine Kommunikationsverbindung aufnehmen will, die Basisstation eine Direktverbindung zwischen dem mobilen Endgerät und dem zweiten mobilen Endgerät initialisiert, wenn sich dadurch die Interferenz-Situation am Ort des mobilen Endgerätes verbessert.

3. Verfahren nach Anspruch 2,
bei dem eine Direktverbindung zwischen dem mobilen Endgerät und dem zweiten mobilen Endgerät dann hergestellt wird, wenn die stärkste, in der Folge von Abtastwerten identifizierte Funkquelle das zweite mobile Endgerät ist, wobei die Interferenzsituation in der Funkzelle insgesamt berücksichtigt wird.

4. Verfahren nach einem der Ansprüche 1 bis 3,
bei dem sämtliche mobilen Endgeräte in der Mobilfunkzelle wiederkehrend empfangene Rohdaten-Signale an die Basisstation aussenden und aufgrund dessen die Basisstation die Verteilung der Funkressourcen in der Mobilfunkzelle überprüft.

## Claims

1. Method for administering radio resources in a mobile radio cell which comprises a plurality of mobile terminals which can be distinguished by their radio signals, and a base station, in which method:
a mobile terminal is requested by the base station to send out a signal, currently present at a receiver of the mobile terminal, which is representative of an interference situation at the location of the mobile terminal, together with information for estimating the channel between the mobile terminal and the base station so that the base station receives raw data at the location of the mobile terminal, evaluates the signal received from the mobile terminal and the information for estimating the channel between the mobile terminal and the base station for determining the radio sources forming the basis of the signal and the intensities of at least some of the radio sources, and
the base station in the mobile radio cell adapts the distribution of the radio resources for improving the interference situation at the location of the mobile terminal.

2. Method according to Claim 1, in which, in the case where the mobile terminal wishes to establish a communication link with a second mobile terminal, the base station initializes a direct link between the mobile terminal and the second mobile terminal if, as a result, the interference situation is improved at the location of the mobile terminal.

3. Method according to Claim 2, in which a direct link between the mobile terminal and the second mobile terminal is established if the strongest radio source identified in the sequence of samples is the second mobile terminal, taking into account the interference situation in the radio cell overall.

4. Method according to one of Claims 1 to 3, in which all mobile terminals in the mobile radio cell repetitively send out received raw data signals to the base station and, on the basis of these signals, the base station checks the distribution of the radio resources in the mobile radio cell.

## Revendications

1. Procédé de gestion de ressources radio dans une cellule de radiocommunication qui comprend plusieurs terminaux mobiles pouvant être distingués par leurs signaux radio et une station de base, dans lequel :
la station de base demande à un terminal mobile d'émettre un signal, actuellement présent au niveau d'un récepteur du terminal mobile et représentatif d'une situation d'interférence à l'emplacement du terminal mobile, conjointement à des informations pour l'estimation du canal entre le terminal mobile et la station de base de telle sorte que la station de base reçoit des données brutes sur l'emplacement du terminal mobile,
elle évalue le signal reçu du terminal mobile et les informations pour l'estimation du canal entre le terminal mobile et la station de base en vue de la détermination des sources radio à la base du signal et des intensités d'au moins une partie des sources radio, et
elle adapte dans la cellule de radiocommunication mobile la répartition des ressources radio en vue de l'amélioration de la situation d'interférence à l'emplacement du terminal mobile.

2. Procédé selon la revendication 1,
dans lequel, si le terminal mobile veut établir une liaison de communication avec un deuxième terminal mobile, la station de base initialise une liaison directe entre le terminal mobile et le deuxième terminal mobile si la situation d'interférence à l'emplacement du terminal mobile s'améliore suite à cette opération.

3. Procédé selon la revendication 2,
dans lequel on établit une liaison directe entre le terminal mobile et le deuxième terminal mobile lorsque la source radio la plus intense identifiée dans la séquence de valeurs échantillonnées est le deuxième terminal mobile, la situation d'interférence étant prise en compte globalement dans la cellule radio.

4. Procédé selon l'une des revendications 1 à 3,
dans lequel tous les terminaux mobiles dans la cellule de radiocommunication mobile émettent des signaux de données brutes reçus de façon répétée vers la station de base et la station de base teste à partir de ces signaux la répartition des ressources radio dans la cellule de radiocommunication mobile.
